# EUROPÄISCHE PATENTSCHRIFT

(11) **EP 2 710 888 B1**
(45) Veröffentlichungstag und Bekanntmachung des Hinweises auf die Patenterteilung: **15.01.2020**
(21) Anmeldenummer: 13183880.7
(22) Anmeldetag: 11.09.2013
(51) Int. Cl.: A01J 25/12, A01J 25/13

(54) **Verfahren und Vorrichtung zur Käseherstellung**
Method and device for producing cheese
Procédé et dispositif destinés à la fabrication de fromage

(30) Priorität: 21.09.2012 CH 17112012
(43) Veröffentlichungstag der Anmeldung: 26.03.2014
(73) Patentinhaber: Kalt Maschinenbau AG, 9604 Lütisburg (CH)
(72) Erfinder: Waldburger, Peter, 9246 Niederbüren (CH)
(74) Vertreter: Frommhold, Joachim

(56) Entgegenhaltungen:
- CH-A2- 704 208
- FR-A1- 2 462 253
- FR-A1- 2 473 840
- GB-A- 951 746
- US-A- 4 515 815
- US-B1- 7 757 876

## Beschreibung

Die Erfindung betrifft ein Verfahren zur Käseherstellung und eine Vorrichtung hierzu, insbesondere eine sogenannte Kassettenpresse mit runden oder eckigen Käseformen.
Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus' für die Formen. Verteilkopf wie Wendemechanismus müssen dabei manuell bereitgestellt resp. gewechselt werden. Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen. Die Kassetten haben eine spaltminimierende Randausbildung und zum schieben der Kassetten ist eine mechanisierte Einrichtung vorgesehen.
Der Wanne kann zudem eine Ablage für zweite Formen, in denen die gepressten Rohkäselaibe umgeladen werden, zugeordnet sein (EP-A-1769676). Die zweiten Formen können mittels einer Rollenfördereinrichtung einer entsprechenden Handhabungseinrichtung der Presse einem weiteren Arbeitsabschnitt zugeführt werden.

Nach der EP-B-543185 ist ein Formdeckel über eine Kippeinrichtung mit dem Pressstempel verbindbar (selbstzentrierend), so dass infolge möglicher Kippbewegungen ein Ansaugen des Formdeckels an der Käsemesse vermieden wird. Die Form selbst ist rund oder viereckig und kann aus einem äusseren Behälter und einem inneren, gelochten Mantel bestehen.

Die gepressten Käselaibe können zum Beispiel mittels eines Greifers aus der Form entnommen werden, wobei vorgängig Luft in die Pressform eingeblasen wird um den Käselaib von der Formwand zu lösen (EP-B-1269832 oder DE-B-922448).

Der Kontakt der Käselaibe mit eingeblasener Luft oder anderen Gasen kann jedoch ein Sanitationsproblem darstellen. Um dies zu meiden wurde auch versucht, Käselaibe mittels Vakuumgreifer aus der Pressform zu entnehmen. Dies führt jedoch zur Zapfenbildung oder allgemein zur Beschädigung der Oberfläche oder gar zum einreissen des Laibs.

Es ist auch bekannt, Dickmilch bzw. Käsemasse in einem U-förmigen Gewebeband (DE-A-2950497) oder in einer Schneckenpresse (DE-A-3529895) zu entmolken. Während des pressens und formens der Käsemasse kann der Pressdruck auch pulsieren um die Entwässerung zu verbessern.

Gemäss DE-A-1582967 erfolgt das pressen der Dickmilch von unten nach oben in einer schräg angeordneten und perforierten Rohrleitung, die der Wirkung von Vibrationen unterworfen ist. Die Amplitude der Vibration ist so geregelt, dass eine genügende Trocknung der Dickmilch erreicht wird. Am obenliegenden Mundstück der Rohrleitung wird die austretende Masse portionsweise geschnitten und abgeführt.

Der Erfindung liegt nun die Aufgabe zugrunde, eine Vorrichtung zur Käseherstellung zu entwickeln, mit dem insbesondere eine schonende und sanitationsgerechtere Entformung der Käselaibe erreicht werden kann.

Die Aufgabe ist mit den Merkmalen des Patentanspruchs 1 gelöst. Erfindungsgemäss ist die Kassettenpresse mit einer horizontal angeordneten Rütteleinheit versehen, der eine, im Wesentlichen horizontal und parallel zur Rütteleinheit befindliche Fördereinrichtung zuordenbar ist, wobei die Rütteleinheit in Form eines Spannrahmens zur Aufnahme einer Kassette oder mindestens einer Form ausgebildet ist und wobei der Spannrahmen oberhalb der Ablage oder Fördereinrichtung frei schwingend angeordnet ist.

Eine Spezifizierung der erfindungsgemässen Vorrichtung und des Verfahrens ist in den jeweiligen abhängigen Ansprüchen offenbart.

Die Rüttelung erfolgt nur kurzzeitig. Je grösser der Käselaib, desto kleiner ist die zu wählende Rüttelfrequenz. Die Rüttelbewegung kann horizontal oder vertikal erfolgen. Die Käselaibe werden nicht nur schonend entformt, sondern kommen hierbei auch nicht mehr mit bisherigen Handhabungselementen in Kontakt, was eine hygienischere Entformung und Weiterleitung der Käselaibe ermöglicht.
Die erfindungsgemässe Rüttelbewegung unterscheidet erfolgt bevorzugt bei niedriger Frequenz, wirkt nur kurzzeitig, d. h. wenige Sekunden und es wird mindestens ein Rüttelstoss mit wenigen Hüben ausgeführt.

Eine weitere Aufgabe besteht darin, ein Verfahren zur Käseherstellung, eine Kassettenpresse weiter zu verbessern und eine schonende und sanitationsgerechtere Entformung der Käselaibe zu erreichen.

Diese Aufgabe ist mit den Merkmalen des Patentanspruchs 9 gelöst.
Erfindungsgemäss erfolgt ein ablösen des Käselaibs resp. der Käserohmasse von der inneren Wand der Pressform durch ein Rütteln des gepressten Käselaibs unmittelbar resp. direkt vor der Entformung. Die Rüttelbewegung wird unmittelbar nach einem Wendevorgang der Form eingeleitet, damit die Käselaibe gleich auf eine Ablage oder dergleichen fallen können.

Der Rüttler ist bevorzugt ausserhalb der Formen und der Kassette angeordnet, besonders bevorzugt werden hierzu zwei Unwuchtmotoren eingesetzt. Die Unwuchtmotoren sind an einem Spannrahmen angeordnet, der schwingfähig, zum Beispiel auf Federelementen oder an Pendelstäben gelagert ist.
Die Erfindung wird nachfolgend in einem Ausführungsbeispiel anhand einer Zeichnung näher beschrieben. In der Zeichnung zeigen die
- Fig. 1:: eine erfindungsgemässe Kassettenpresse in Teilansicht, mit Spannrahmen;
- Fig. 2:: eine Kassettenpresse nach Fig. 1 nach dem absetzen von Formen im Spannrahmen;
- Fig. 3:: den Spannrahmen nach Fig. 1 in Einzelansicht;
- Fig. 4:: die erfindungsgemässe Kassettenpresse in einer weiteren Ausführungsform;
- Fig. 5:: eine Teilansicht des Spannrahmens der weiteren Ausführungsform gemäss Fig. 4;
- Fig. 6:: eine Teilansicht des Spannrahmens gemäss Fig. 5.

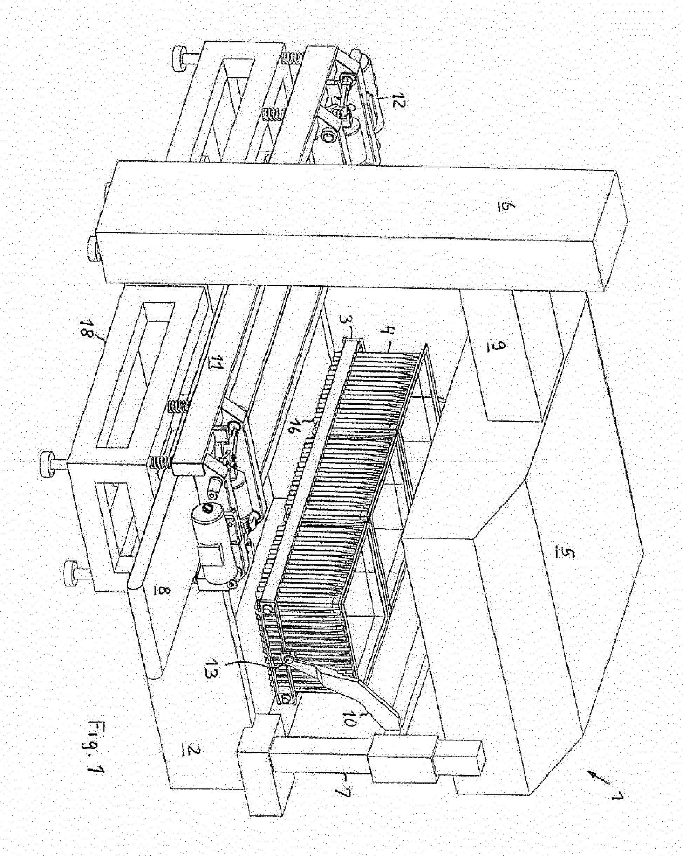

Die Vorrichtung zur Käseherstellung, hier zum flüssigkeitsverringernden Pressen von Käserohmasse, umfasst unter Einbeziehung der Offenbarung der CH-A-704208
- eine in der Draufsicht rechteckige und oben offene Wanne 2 (die geschnitten dargestellt ist, Fig. 1) einer Kassettenpresse 1 mit in der Draufsicht rechteckigen, oben offenen Kassetten 3, die in Reihen quer zur Längsrichtung der Wanne 2 nebeneinander angeordnet sind,
- Formen 4 zur Aufnahme der zu pressenden Käserohmasse, die in den Kassetten 3 angeordnet sind, wobei eine Form 4 Teil der Kassette 3 ist und zumindest einen Boden und einen Mantel mit mindestens einem Auslass für die abzupressende Flüssigkeit aufweist, und wobei eine Kassette mindestens eine Form 4 umfasst und zumindest der Boden der Form 4 mit einer Rippenstruktur 16 versehen sein kann,
- auf den oberen Rändern, die die Aussenseiten des Kassettenblocks in der Wanne 2 in Längs- und Querrichtung bilden, können Randbleche in Höhe von einigen Zentimetern angeordnet sein, um ein einschwemmen der Käserohmasse (z. B. mittels eines Rohrverteilers o. a. Mittel) bis oberhalb der Kassettenoberkante zu ermöglichen
- einen, auf Endsäulen 6 gelagerten Presskopf 5 mit einer Vielzahl, auf die Formen 4 ausgerichteten und nicht explizit dargestellten Pressstempel zum Pressen der Käserohmasse, z. B. entsprechend der Offenbarung der EP-B-543899 ausgebildet, sowie ggf. Niederhalter zum abdrücken des Presskopfes 5 von den Kassetten 3
- ein Rohrverteilsystem resp. einen Abfüllapparat zum Einschwemmen der Käserohmasse,
- mindestens eine Handhabungseinrichtung 7, die motorisch betrieben entlang der Längsseiten der Wanne 2 verfahrbar ist, zum anheben, verfahren zu und ablegen einer Kassette 3 auf einer Fördereinrichtung 8 ausserhalb der Wanne 2,
- wobei die Fördereinrichtung 8 innerhalb der entsprechenden Endsäule 6 angeordnet ist, weshalb diese Endsäule 6 mittels Traversen 9 vom Presskopf 5 resp. der Wanne 2 beabstandet ist
- eine Einrichtung zum drehen/wenden (Wendeeinheit 10) der Kassette 3 bzw. Kassettenreihe um deren Längsachse
- einen oberhalb der Fördereinrichtung 8 horizontal angeordneten und federnd auf einem Unterbau 18 gelagerten Rüttler in Form eines quaderförmigen Spannrahmens 11, 20 zur Aufnahme der Kassette 3, der mit zwei Unwuchtmotoren 12, 21, d. h. an jeder Schmalseite mit einem Unwuchtmotor versehen ist und nach einer Rüttelung werden die Käselaibe auf die Fördereinrichtung 8 entleert, die die zwischen Spannrahmen 11, 20 und Unterbau 18 verfahrbar angeordnet ist.

Eine Kassette 3 besteht zumindest aus einem Rahmen, der aus Streben, an denen Antriebszentrierzapfen 13 zum aufnehmen und wenden der Kassette 3 sowie Zentrierzapfen für die Wanne resp. den Spannrahmen vorgesehen sind.

Die Rippenstruktur 16 der Aussenwand der metallischen Form 4 und insbesondere des Formbodens ermöglicht nicht nur den Verzicht auf einen doppelten Boden sondern auch eine visuelle Kontrolle desselben und ebenso den Einsatz stabiler Formen aus Kunststoff.

Die Handhabungseinrichtung 7 umfasst gemäss CH-A-704208 zwei miteinander verbundene Säulen, an denen eine Traverse geführt ist, an der wiederum Aufnahmearme für die Kassetten 3 angeordnet sind. Die Aufnahmearme sind zudem mit Kassettenarretierblöcken versehen.

Eine Antriebswelle oberhalb der Traverse dient der Ausführung des Hubs und Antriebszahnräder auf einer Zahnstange dem Hub resp. der horizontalen Bewegung. Der Hub ist nach oben wie nach unten durch Dämpfer an den Säulen begrenzt.

Die Wendeeinheit 10 weist eine motorisch drehbare Aufnahmewelle mit einem Aufnahmezapfen aus Kunststoff sowie einen Wendesupport auf.

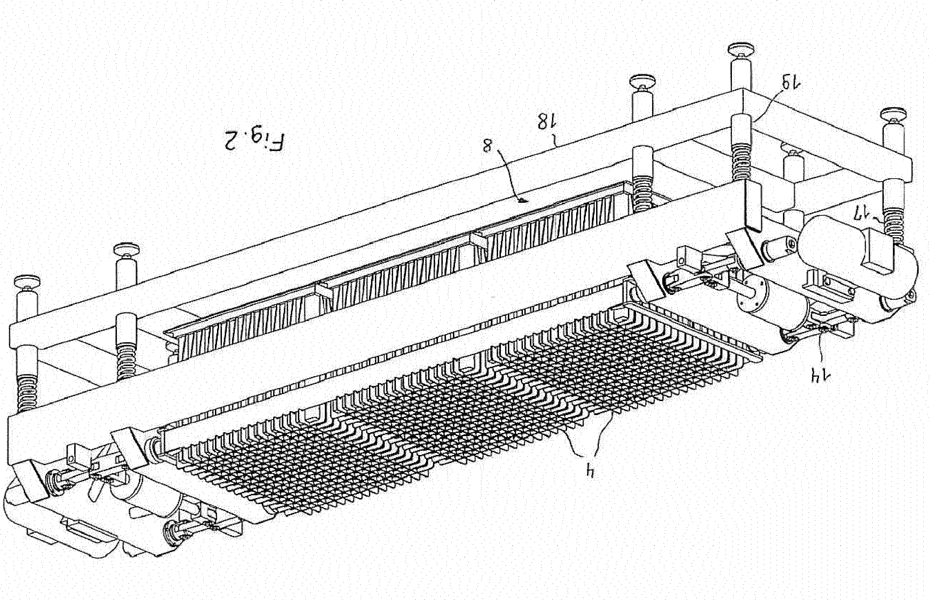

Zur Durchführung des Wendevorgangs werden die Kassetten 3 zunächst an Antriebsdrehzapfen 13, die an der Kassette 3 befestigt sind, in Ausnehmungen der Aufnahmearme der Handhabungseinrichtung 7 aufgenommen, angehoben und mittels der Kassettenarretierblöcke gesichert. Begonnen wird dabei mit der, der Wendeeinheit 10 nächstgelegen Kassette. Anschliessend werden die Kassetten 3 über den Spannrahmen 11 verfahren, gewendet und in diesem abgesetzt (Fig. 2). Die Aufnahmearme können zurückfahren und durch Betätigung von Kniehebelgelenken 14 wird die Kassette 3 zwischen Spannblöcken 15 fixiert. Anschliessend führen die Unwuchtmotoren 12 synchron eine vertikale Rüttelbewegung von wenigen Hüben aus und die Käselaibe lösen sich schonend, ohne Verletzung der Laiboberfläche von der Innenwand der Form 4.

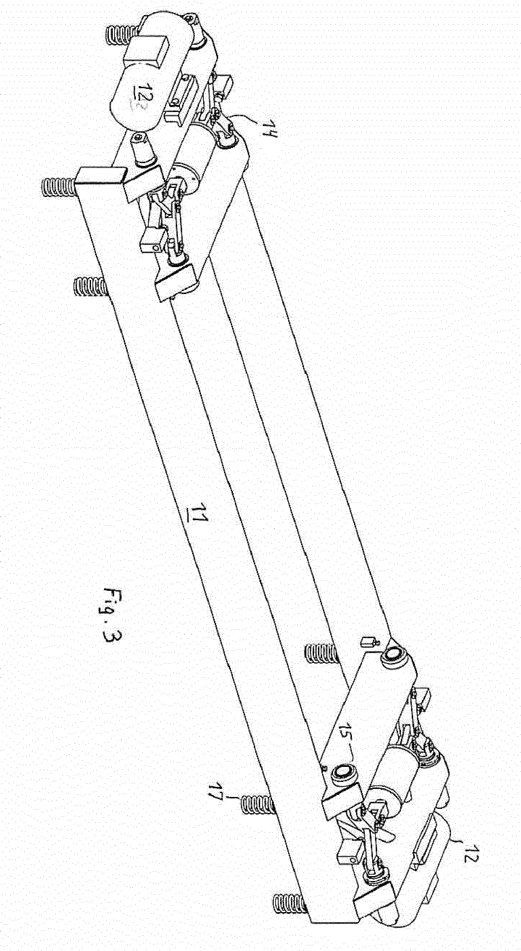

Die Kassette 3 ist nur im Spannrahmen 11 befestigt und liegt bei der Rüttelung sonst nicht auf. Der Spannrahmen 11 liegt in einer ersten Ausführungsform (Fig. 1 bis 3) nur mittels acht massiven Federelementen 17 (Druckfeder) auf dem Unterbau 18 auf, wobei die Federelemente 17 über Zentrierzapfen 19 gehalten und zentriert sind (Fig. 2).

So kann der Spannrahmen 11 während der Rüttelung zusammen mit der Kassette 3 frei schwingen.
Infolge der Lagerung des Spannrahmens 11 auf Federelementen 17 wird die Rüttelbewegung nicht auf die Fördereinrichtung 8 resp. die Struktur der Kassettenpresse 1 selbst übertragen. Nach Ablage der Käselaibe fährt die Handhabungseinrichtung 7 synchron mit der Kassette 3 wieder nach oben, die Kassette 3 wird im Aufnahmezapfen in die Ausgangsstellung gedreht, erneut von der Handhabungseinrichtung 7 aufgenommen, verfahren und in der Wanne 2 am vorgenannten Ort abgesetzt.

Die Kassette 3 ist mit der offenen Deckfläche auf bzw. über der Fördereinrichtung 8 positioniert und die Formen 4 werden entleert, die Käselaibe fallen auf die Fördereinrichtung 8.

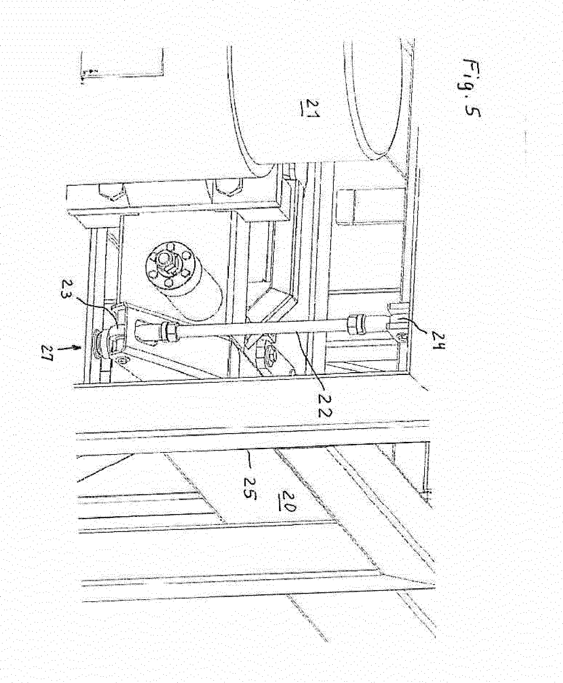

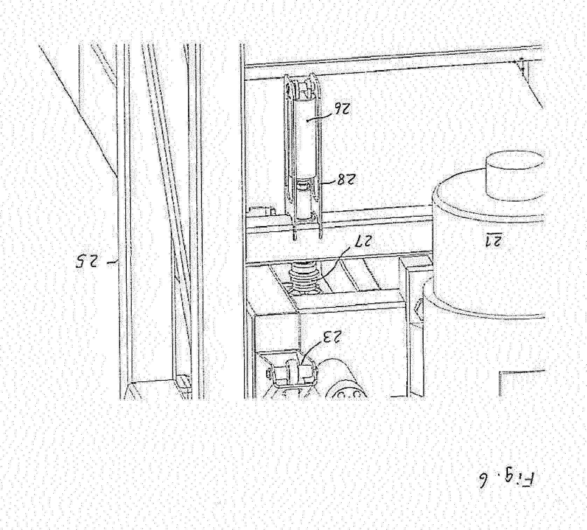

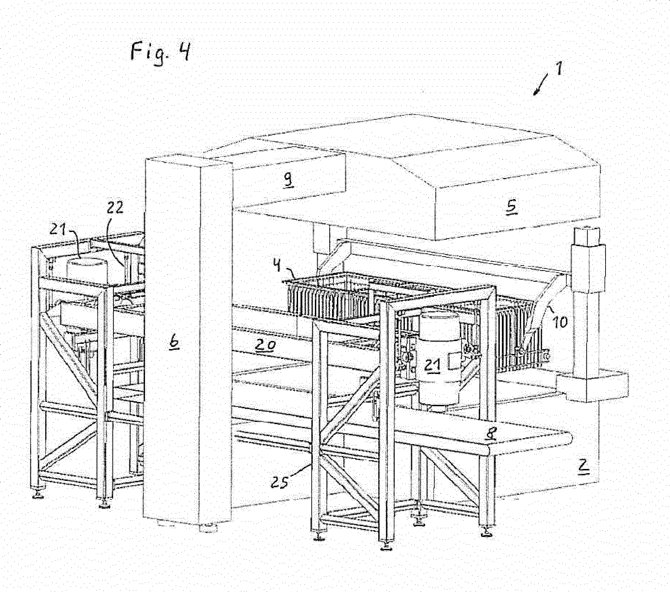

In einer weiteren Ausführungsform gemäss der Fig. 4 bis 6 ist der Spannrahmen 20 nicht auf Federelementen abgestützt, sondern ist an vier Pendelstäben 22 frei schwingend gehangen. Hierzu ist eine Tragstruktur 25 vorgesehen, an deren Schmalseiten obere Lager 24 zur Aufnahme eines Pendelstabes 22 angebracht sind. An jeder Ecke des Spannrahmens 20, der in seinem Basisaufbau dem Spannrahmen 11 vergleichbar ist, ist ein unteres Lager 23 zur Aufnahme eines Pendelstabes 22 vorgesehen. Die Lager 23, 24 ermöglichen eine Relativbeweglichkeit der Pendelstäbe 22 quer zur Längsachse der Pendelstäbe 22. Der Spannrahmen 20 kann somit eine ebene Kreisschwingbewegung ausführen, sobald die Unwuchtmotoren 21, analog zu den Unwuchtmotoren 12 in Betrieb sind.
Die Pendelstäbe 22 haben keine störende Eigenfrequenz und sie werden nicht auf Biegung belastet. Somit ist eine annähernd kreisförmige, horizontale Rüttelbewegung möglich. Gegenüber der ersten Ausführungsform mit Federelementen 17 läuft die Rüttelbewegung von Anfang an, d. h. weitgehend ohne Verzögerung und mit geringerer Eigenfrequenz (ca. 1Hz) gegenüber Federn.
Um einen kurzen Zyklus von ca. 5s zu ermöglichen, ist ein schnelles Dämpfen der Schwingbewegung nach dem lösen der Käselaibe von der Forminnenwand erforderlich. Analog zur ersten Ausführungsform erfolgt die Hauptdämpfung über eine Gegenerregung der Unwuchtmotoren 12, 21. Für eine Schnellbremsung sind zusätzliche vier Dämpfer vorgesehen. Diese sind an der Unterseite des Spannrahmens 20 angeordnet und mit der Tragstruktur 25 gekoppelt. Sie umfassen eine Gummidämpfer 27, der im Spannrahmen 20 aufgenommen ist. Der Gummidämpfer 27 wiederum ist auf der Kolbenstange eines Dämpfzylinders 26 angeordnet und der Dämpfzylinder 26 ist unterhalb des Spannrahmens 20 in einer Aufhängung 28 in der Tragstruktur 25 so gehangen, dass eine Relativbeweglichkeit der Kolbenstange quer zu ihrer Längsachse gegeben ist.

Die Käselaibe werden also mittels Rüttelbewegung und Schwerkraft entformt. Die Rüttelfrequenz ist bevorzugt tief und beträgt zum Beispiel ca. 13Hz bei grossen Käselaiben, allgemein bis zu 40Hz.
Die Erregerfrequenz der Unwuchtmotoren 12, 21 ist etwa der Eigenfrequenz des Käses, die konsistenzabhängig ist, entsprechend eingestellt. Je geringer die Eigendämpfung des Käses ist, desto höher ist die erforderliche Amplitude der Schwing- bzw. Rüttelbewegung. Die ist für die Unversehrtheit der entformten Käselaibe zu beachten, wie auch für einen möglichst geringen Energieverbrauch der Vorrichtung.

Anstelle der Fördereinrichtung 8 kann auch ein Ablagetisch angeordnet sein, von dem die Käselaibe manuell oder maschinell weggeführt werden.

Die Käselaibe werden auf der Fördereinrichtung 8 einer weiteren Verarbeitung zugeführt.

Es wäre ebenfalls möglich, die Käselaibe nach dem Rütteln in eine Sekundärform oder in einem Salzbadkanal etc. abzulegen.

### Bezugszeichen

- 1: Kassettenpresse
- 2: Wanne
- 3: Kassette
- 4: Form
- 5: Presskopf
- 6: Endsäule
- 7: Handhabungseinrichtung
- 8: Fördereinrichtung
- 9: Traverse
- 10: Wendeeinheit
- 11: Spannrahmen
- 12: Unwuchtmotor
- 13: Antriebsdrehzapfen
- 14: Kniehebelgelenk
- 15: Spannblock
- 16: Rippenstruktur
- 17: Federelement
- 18: Unterbau
- 19: Zentrierzapfen
- 20: Spannrahmen
- 21: Unwuchtmotor
- 22: Pendelstab
- 23: unteres Lager
- 24: oberes Lager
- 25: Tragstruktur
- 26: Dämpfzylinder
- 27: Gummidämpfer
- 28: Aufhängung

## Patentansprüche

1. Vorrichtung zur Käseherstellung, insbesondere eine Kassettenpresse mit runden oder eckigen Käseformen zum flüssigkeitsverringernden Pressen von Käserohmasse, wobei die Formen in Kassetten aufgenommen sind, zumindest aufweisend
- eine in der Draufsicht rechteckige und oben offene Wanne (2) mit in der Draufsicht runden oder rechteckigen, oben offenen Kassetten (3), die in Reihen quer zur Längsrichtung der Wanne (2) nebeneinander angeordnet sind,
- einen Presskopf (5) mit einer Vielzahl, auf die Formen (4) ausgerichteten Pressstempel zum Pressen der Käserohmasse,
- Mittel zum Einschwemmen der Käserohmasse,
- mindestens eine Handhabungseinrichtung (7), die entlang der Längsseiten der Wanne (2) verfahrbar ist
- eine, ausserhalb der Wanne (2) dieser zugeordnete Ablage oder Fördereinrichtung (8) zum ablegen und Transport von Käselaiben,
- eine, entlang der Längsseiten der Wanne (2) verfahrbare Handhabungseinrichtung (7), die mit einer Wendeeinheit (10) korrespondiert,
**dadurch gekennzeichnet, dass** die Kassettenpresse (1) mit einer horizontal angeordneten Rütteleinheit versehen ist, der eine, im Wesentlichen horizontal und parallel zur Rütteleinheit befindliche Ablage oder Fördereinrichtung (8) zuordenbar ist, wobei die Rütteleinheit in Form eines Spannrahmens (11, 20) zur Aufnahme einer Kassette (3) oder mindestens einer Form (4) ausgebildet ist und wobei der Spannrahmen (11, 20) oberhalb der Ablage oder Fördereinrichtung (8) frei schwingend angeordnet ist.

2. Vorrichtung nach Anspruch 1, **dadurch gekennzeichnet, dass** die Rütteleinheit in Form eines bevorzugt quaderförmigen Spannrahmens (11, 20) ausgebildet und oberhalb der Ablage oder Fördereinrichtung (8) frei schwingend angeordnet ist.

3. Vorrichtung nach Anspruch 1 oder 2, **dadurch gekennzeichnet, dass** der Spannrahmen (11, 20) mit zwei Unwuchtmotoren (12, 21) versehen ist, einem Unwuchtmotor an jeder Schmalseite.

4. Vorrichtung nach einem der Ansprüche 1 bis 3, **dadurch gekennzeichnet, dass** der Spannrahmen (11) federnd gelagert ist, bevorzugt auf massiven Federelementen 17.

5. Vorrichtung nach einem der Ansprüche 1 bis 4, **dadurch gekennzeichnet, dass** der Spannrahmen (20) frei schwingend an Pendelstäben (22) gehangen ist.

6. Vorrichtung nach Anspruch 5, **dadurch gekennzeichnet, dass** der Spannrahmen (20) frei schwingend an Pendelstäben (22) in einer Tragstruktur (25)gehangen ist, oberhalb der Ablage oder Fördereinrichtung (8).

7. Vorrichtung nach Anspruch 1, **dadurch gekennzeichnet, dass** die Handhabungseinrichtung (7) mit Aufnahmearmen (13) zur Aufnahme und Arretierung der Kassetten (3) versehen ist und dass die Wendeeinheit (10) mit Mitteln zum Aufnehmen und Wenden der Kassette (3) versehen ist.

8. Vorrichtung nach einem der Ansprüche 1 bis 7, **dadurch gekennzeichnet, dass** die Fördereinrichtung (8) zwischen einer Endsäule (6) und der Wanne (2) der Kassettenpresse (1) angeordnet ist.

9. Verfahren zur Käseherstellung, unter Verwendung der Vorrichtung nach Anspruch 1, insbesondere zur Herstellung von Käselaiben, wobei eine Käserohmasse in Formen (4) gefüllt und nachfolgend zur Entwässerung gepresst wird, und nach einem Wendevorgang die gepresste Käserohmasse von der Innenwand der Form (4) gelöst und aus der Form (4) entleert wird, wobei die Käserohmasse in der Form (4) unmittelbar nach dem Wendevorgang einer Rüttelbewegung unterzogen und unmittelbar aus der Form entleert wird.

10. Verfahren nach Anspruch 9, **dadurch gekennzeichnet, dass** die Rüttelbewegung horizontal oder vertikal ausgeführt wird.

11. Verfahren nach Anspruch 9 oder 10, **dadurch gekennzeichnet, dass** die Rüttelbewegung mindestens einmal erfolgt und mindestens einen bis wenige Hübe mit bevorzugt tiefer Frequenz umfasst.

## Claims

1. A device for cheese production, particularly a cassette press, having round or polygonal cheese moulds for liquid-reducing pressing of raw cheese mixture, the moulds being mounted in cassettes, at least having
- a vat (2), which is rectangular in plan view and open at the top, having cassettes (3), which are round or rectangular in plan view and open at the top and are arranged next to one another in rows transversely to the longitudinal direction of the vat (2),
- a press head (5) having a multiplicity of press stamps, aligned to the moulds (4), for pressing the raw cheese mixture,
- means for washing the raw cheese mixture,
- at least one handling device (7), which can be moved along the longitudinal sides of the vat (2),
- a tray or conveying system (8), outside the vat (2) and assigned to the same, for depositing and transporting cheese loaves,
- a handling device (7), which can be moved along the longitudinal sides of the vat (2) and corresponds to a turning unit (10),
**characterized in that** the cassette press (1) is provided with a horizontally arranged shaking unit, to which a tray or conveying system (8), located substantially horizontally and parallel to the shaking unit, can be assigned, wherein the shaking unit is constructed in the form of a clamping frame (11, 20) for mounting a cassette (3) or at least one mould (4) and wherein the clamping frame (11, 20) is arranged in a freely vibrating manner above the tray or conveying system (8).

2. The device according to claim 1, **characterized in that** the shaking unit is constructed in the form of a preferably cuboid clamping frame (11, 20) and arranged in a freely vibrating manner above the tray or conveying system (8).

3. The device according to claim 1 or 2, **characterized in that** the clamping frame (11, 20) is provided with two unbalance motors (12, 21), one unbalance motor on each narrow side.

4. The device according to one of claims 1 to 3, **characterized in that** the clamping frame (11) is mounted resiliently, preferably on solid spring elements (17).

5. The device according to one of claims 1 to 4, **characterized in that** the clamping frame (20) is hung in a freely vibrating manner on pendulum rods (22).

6. The device according to claim 5, **characterized in that** the clamping frame (20) is hung in a freely vibrating manner on pendulum rods (22) in a supporting structure (25) above the tray or conveying system (8).

7. The device according to claim 1, **characterized in that** the handling device (7) is provided with mounting arms (13) for mounting and stopping the cassettes (3) and **in that** the turning unit (10) is provided with means for mounting and turning the cassette (3).

8. The device according to one of claims 1 to 7, **characterized in that** the conveying system (8) is arranged between an end pillar (6) and the vat (2) of the cassette press (1).

9. A method for cheese production using the device according to claim 1, particularly for producing cheese loaves, a raw cheese mixture being poured into moulds (4) and subsequently pressed for dewatering, and after a turning process, the pressed raw cheese mixture being detached from the inner wall of the mould (4) and removed from the mould (4), the raw cheese mixture being subjected to a shaking movement in the mould (4) directly after the turning process and removed from the mould directly.

10. The method according to claim 9, **characterized in that** the shaking movement is executed horizontally or vertically.

11. The method according to claim 9 or 10, **characterized in that** the shaking movement takes place at least once and comprises at least one to a few strokes, with a preferably deeper frequency.

## Revendications

1. Dispositif, destiné à la fabrication de fromage, notamment une presse à cassettes garnie de moules à fromage ronds ou angulaires, pour le pressage réducteur de liquide de masse brute de fromage, les moules étant réceptionnés de préférence dans des cassettes, comportant au moins :
- une cuve (2) rectangulaire, vue en élévation et ouverte sur le dessus, garnie de cassettes (3) rondes ou rectangulaires, vues en élévation, ouvertes sur le dessus, qui sont placées côte à côte en rangées, à la transversale de la direction longitudinale de la cuve (2),
- une tête de pressage (5) pourvue d'une pluralité de poinçons de pressage, orientés en direction des moules (4), destinés à presser la masse brute de fromage,
- des moyens, destinés à noyer la masse brute de fromage,
- au moins un dispositif de manipulation (7), qui est déplaçable le long des côtés longitudinaux de la cuve (2),
- une dépose ou un dispositif de convoyage (8) extérieur(e) à la cuve (2), associé(e) à celle-ci, pour déposer et transporter des meules de fromage,
- un dispositif de manipulation (7), déplaçable le long des côtés longitudinaux de la cuve (2), qui correspond avec une unité de retournement (10),
**caractérisé en ce que** la presse à cassettes (1) est munie d'une unité vibrante placée à l'horizontale, à laquelle on peut associer une dépose ou un dispositif de convoyage (8), se trouvant sensiblement à l'horizontale et à la parallèle de l'unité vibrante, l'unité vibrante étant conçue sous la forme d'un cadre de serrage (11, 20), destiné à recevoir une cassette (3) ou au moins un moule (4) et le cadre de serrage (11, 20) étant placé en oscillation libre au-dessus de la dépose ou du dispositif de convoyage (8).

2. Dispositif selon la revendication 1, **caractérisé en ce que** l'unité vibrante est conçue sous la forme d'un cadre de serrage (11, 20), de préférence parallélépipédique et est placée en oscillation libre au-dessus de la dépose ou du dispositif de convoyage (8).

3. Dispositif selon la revendication 1 ou 2, **caractérisé en ce que** le cadre de serrage (11, 20) est muni de deux moteurs à balourds (12, 21), un moteur à balourds sur chaque côté étroit.

4. Dispositif selon l'une quelconque des revendications 1 à 3, **caractérisé en ce que** le cadre de serrage (11) est logé sur ressort, de préférence sur des éléments à ressort (17) massifs.

5. Dispositif selon l'une quelconque des revendications 1 à 4, **caractérisé en ce que** le cadre de serrage (20) est accroché en oscillation libre sur des appuis pendulaires (22).

6. Dispositif selon la revendication 5, **caractérisé en ce que** le cadre de serrage (20) est accroché en oscillation libre sur des appuis pendulaires (22) dans une structure porteuse (25), au-dessus de la dépose ou du dispositif de convoyage (8).

7. Dispositif selon la revendication 1, **caractérisé en ce que** le dispositif de manipulation (7) est muni de bras récepteurs (13), destinés à réceptionner et à bloquer les cassettes (3) et **en ce que** l'unité de retournement (10) est munie de moyens, destinés à réceptionner et à retourner la cassette (3).

8. Dispositif selon l'une quelconque des revendications 1 à 7, **caractérisé en ce que** le dispositif de convoyage (8) est placé entre une colonne d'extrémité (6) et la cuve (2) de la presse à cassettes (1).

9. Procédé, destiné à la fabrication de fromage, notamment à la fabrication de meules de fromage, en utilisant le dispositif selon la revendication 1, lors duquel on remplit des moules (4) d'une masse brute de fromage et on procède ensuite à un pressage pour l'égouttage, et après un processus de retournement, on détache la masse brute de fromage pressée de la paroi intérieure du moule (4) et on la sort du moule (4), la masse brute de fromage étant soumise dans le moule (4), immédiatement après le processus de retournement à un mouvement vibratoire et immédiatement retirée du moule.

10. Procédé selon la revendication 9, caractérisé en ce le mouvement vibratoire est réalisé à l'horizontale ou à la verticale.

11. Procédé selon la revendication 9 ou 10, **caractérisé en ce que** le mouvement vibratoire s'effectue au moins une fois et comprend au moins d'une à quelques courses, de préférence à faible fréquence.
